Europäisches Patentamt

European Patent Office

Office européen des brevets

(11) Publication number: **0 128 713**
**B1**

## EUROPEAN PATENT SPECIFICATION

(45) Date of publication of patent specification: **31.05.89**

(21) Application number: **84303707.8**

(22) Date of filing: **01.06.84**

(51) Int. Cl.[4]: **C 07 B 33/00, C 07 C 53/08,**
**C 07 C 53/122, C 07 C 51/235,**
**B 01 J 31/18, C 01 G 3/00,**
**C 01 G 23/00, C 01 G 31/00**

(54) Process for producing organic compounds by utilizing oxygen complexes.

(30) Priority: **03.06.83 JP 99022/83**
**29.02.84 JP 38137/83**

(43) Date of publication of application:
**19.12.84 Bulletin 84/51**

(45) Publication of the grant of the patent:
**31.05.89 Bulletin 89/22**

(84) Designated Contracting States:
**BE CH DE FR GB IT LI**

(56) References cited:
**EP-A-0 026 998**
**FR-A-2 023 688**
**FR-A-2 450 802**

**JOURNAL OF THE AMERICAN CHEMICAL SOCIETY, vol. 100, no. 17, 16th August 1978, pages 5437-5444, American Chemical Society, US; H. MIMOUN et al.: "Activation of molecular oxygen: Rhodium-catalyzed oxidation of olefins"**

(73) Proprietor: **BABCOCK-HITACHI KABUSHIKI KAISHA**
**6-2, 2-chome, Ohtemachi Chiyoda-ku**
**Tokyo 100 (JP)**

(72) Inventor: **Yamada, Mutsuo Kure Research Laboratory**
**Babcock-Hitachi K. K. 3-36, Takara-machi**
**Kure-shi Hiroshima-ken (JP)**
Inventor: **Nishimura, Yasuyuki Kure Research Laboratory**
**Babcock-Hitachi K. K. 3-36, Takara-machi**
**Kure-shi Hiroshima-ken (JP)**
Inventor: **Arikawa, Yoshijiro Kure Research Laboratory**
**Babcock-Hitachi K. K. 3-36, Takara-machi**
**Kure-shi Hiroshima-ken (JP)**
Inventor: **Kuwahara, Takanori Kure Research Laboratory**
**Babcock-Hitachi K. K. 3-36, Takara-machi**
**Kure-shi Hiroshima-ken (JP)**
Inventor: **Kamiguchi, Taiji Kure Research Laboratory**
**Babcock-Hitachi K. K. 3-36, Takara-machi**
**Kure-shi Hiroshima-ken (JP)**
Inventor: **Tanimoto, Hirotoshi Kure Research Laboratory**
**Babcock-Hitachi K. K. 3-36, Takara-machi**
**Kure-shi Hiroshima-ken (JP)**

Courier Press, Leamington Spa, England.

**EP 0 128 713 B1**

(74) Representative: **Pendlebury, Anthony et al**
**Page, White & Farrer 5 Plough Place New Fetter**
**Lane**
**London EC4A 1HY (GB)**

## Description

This invention relates to a process for producing organic compounds by utilizing oxygen complexes as oxidising agents, and more particularly it relates to a process for producing oxygen-containing organic compounds by the use of oxygen complexes.

Acetic acid and aldehydes as basic chemicals for petrochemical industry have been produced by oxidation reactions of suitable organic substrates as raw materials. Such oxidation reactions occupy an important place among reaction processes which are employed in the petrochemical industry. These oxidation reactions, however, have so far been carried out at high temperatures and high pressures, and it is found that in addition to the desired products, by-products are usually formed. The improvement of the selectivity and yield of such reactions has become an important problem. For example, in the preparation of carboxylic acids from aldehydes, oxygen-oxidation processes using transition metal ions such as ions of Co and Mn, as catalyst have been employed. The mechanism of the reaction is believed to be that a metal ion is first oxidised with oxygen into a high valence state ion such as Co(III) or Mn(III), followed by oxidising the aldehyde by means of the Co(III) or Mn(III). However, with such processes, high yields cannot be expected, and complicated separation steps are required for purification of the resulting product.

Various studies have been made on the use of oxygen complexes as effective oxidising agents for oxidation reactions of organic substances, using as model reactions the respiratory reaction of living bodies. For example, there are iron-protein and copper-protein compounds in mammals and molluscs. These are complex compounds consisting of protein and divalent iron or monovalent copper ion.

Usually, in the case of metal ions capable of taking various valences, the low valence ions thereof are contacted with oxygen to form high valence metal ions through oxidation, as expressed by the following equations:

$$Cu(I) + 1/4\ O_2 + 1/2\ H_2O \rightarrow Cu(II) + OH^- \quad (1)$$

$$Fe(II) + 1/4\ O_2 + 1/2\ H_2O \rightarrow Fe(III) + OH^- \quad (2)$$

However, in the case of haemoglobin or haemocyanin wherein Fe(II) or Cu(I) is reacted with a protein in advance to form a protein complex, it has been known that even if such a complex is contacted with oxygen, there occurs no direct oxidation of metal ions, but molecular oxygen is coordinated with metal ions in the complex (i.e. formation of an oxygen complex), as follows ("Chemistry of Metal Proteins" in Japanese, edited by Ohtsuka and Yamanaka, Kohdansha (1983)):

$$P-Fe(II)-O_2-Fe(II)-P,$$
$$P-Cu(I)-O_2-Cu(I)-P \quad (3)$$

wherein P represents a protein.

The oxygen molecule thus combined is activated by its coordination with the metal ions, and is then able to oxidise various organic substances at low temperatures such as the body temperature of living bodies, and its reaction heat constitutes the energy source of living bodies. However, if such a protein complex is separated from living bodies, it becomes unstable, and the metal ion is readily oxygen-oxidised to higher valence state. However, there are a number of difficulties in applying such naturally-occurring complexes in an industrial oxidation process. It would be desirable to obtain a synthetic compound as a complexing agent and to combine this compound with a suitable transition metal to thereby producing a complex capable of forming a stable oxygen complex capable of acting as the required oxidising agent.

FR—A—2023688 discloses organometallic complexes formed between hexaalkylphosphoramides (HAPA) and transition metal salts, including rare earth metals, for use as catalysts for the oxidation of olefins to form oxidation products, particularly the corresponding hydroperoxides.

An object of the present invention is to provide a process for oxidising organic compounds by which desired oxygen-containing organic compounds can be produced with a high selectivity and a good yield.

The present invention, in short, consists in a process for producing oxygen-containing organic compounds, which process comprises using as a catalyst, a transition metal complex capable of forming an oxygen complex by coordination of oxygen molecule therewith, and capable of oxidising organic compounds with the combined oxygen in the oxygen complex under mild conditions.

According to the present invention there is provided a process for producing oxygen-containing organic compounds by oxidising organic compounds in the presence of a catalyst, which catalyst is a complex $(M_mX_n \cdot Ll)$ consisting of a transition metal compound $(M_mX_n)$ wherein M represents at least one transition metal and X represents an anion and an organic phosphorus compound (L) as a ligand, and m, n and l are positive integers characterised in that the organic compounds which are oxidised exclude olefins, in that the catalyst activates oxygen through formation of a complex of the catalyst and molecular oxygen, and in that M represents at least one transition metal chosen from Cu and Ag of Group I; Ti and Zr of Group IV; V and Nb of Group V; Cr, Mo and W of Group VI and Fe, Co and Ni of Group VIII of the Periodic Table.

In the complex of the present invention, X is preferably a halogen ion such as $Cl^-$, $Br^-$, $I^-$ or an anion such as $BF_4^-$, $PF_6^-$, $SO_4^{2-}$, $CH_3COO^-$; the

ligand L is preferably an alkoxy, alkyl or amide derivative of phosphorus acid or of phosphoric acid; and each of m, n and l are preferably in the range of 1 to 4.

We have made extensive research on compounds capable of forming a stable oxygen complex in combination thereof with a suitable transition metal, in the above oxygen-oxidisation of organic compounds, and as a result, have found that as a representative example, a complex of cuprous chloride Cu(I)Cl with a phosphoric acid derivative, hexamethylphosphoramide (hereinafter abbreviated to "hmpa") and also known as tris(dimethylamino)phosphinoxide can form a stable oxygen complex. We have also confirmed that the oxygen combined in the said complex functions as an effective oxidising agent for organic substrates.

When Cu(I)Cl is added to liquid hmpa, a 1:1 complex is formed as follows:

$$Cu(I)Cl + hmpa \rightarrow Cu(I)Cl \cdot hmpa \quad (4)$$

and such a complex is expressed by the general formula $M_m X_n \cdot L_l$ where $m=1$, $n=1$ and $l=1$. In addition, when the central transition metal is Ti(III) or V(III) and the anion is for example Cl, $m=1$, $n=3$ and $l=1$ are applied to said formula.

When the ligand hmpa (m.p. 7°C, b.p. 233°C/760 mm Hg), which is a liquid, is present in excess, the complex dissolves well therein. We have found that the complex also dissolves in n-hexane, toluene, cyclohexane, methyl isobutyl ketone, cyclohexanone, ethanol, ethylene glycol, butylacetate, propylenecarbonate, chloroform, chlorobenzene, triethylamine, pyridine, ethyl methyl ulfoxide, diphenyl sulfone, sulfolane, fluorinated toluene, benzotrifluoride, furan and tetrahydrofuran.

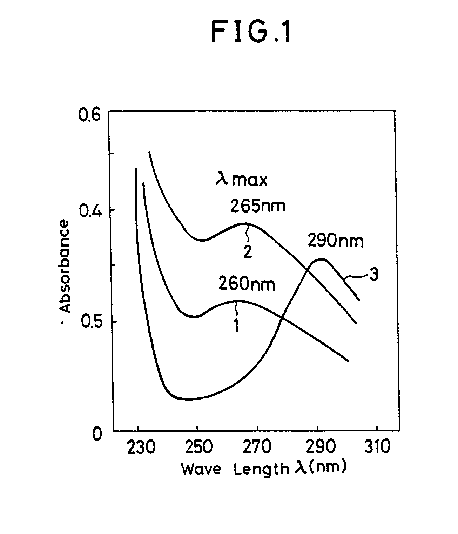

An ethyl alcohol solution of Cu(I)Cl · hmpa complex exhibits a pale yellow color and its absorption spectrum has its maximum absorption at 260 nm, as shown by trace 1 in Fig. 1 which illustrates the absorption spectra of a number of Cu(I) complexes in accordance with the present invention. when oxygen or air is passed through the solution, the absorbance increases and the maximum absorption appears at 265 nm (see Fig. 1, trace 2) with a green colour being exhibited. At first this was assumed to be a complex of Cu(II) formed by oxidation of Cu(I) with oxygen. However, when a complex solution of cupric chloride (Cu(II)Cl$_2$) and hmpa was prepared and its absorption spectrum was measured, the spectrum exhibited a notable difference from that of Cu(I)Cl · hmpa or its solution having oxygen absorbed therein. The spectrum which was obtained had its maximum absorption at 290 mm, as shown by trace 3 in Fig. 1 and the solution exhibited a red-brown colour. This notable difference of the colour of the former solution from that of the Cu(I)Cl · hmpa solution is considered to be due to formation of the so-called oxygen complex having oxygen molecules coordinated therein.

In addition, the amount of oxygen absorbed by a solution containing a definite concentration of the Cu(I)Cl · hmpa complex was measured, and as a result it was found that the molar ratio of absorbed oxygen to Cu(I) was 2:1; hence the compound having its maximum absorption at 265 mm and exhibiting a green colour was a novel oxygen complex having the following structure:

$$hmpa \cdot ClCu(I) - O_2 - Cu(I)Cl \cdot hmpa \quad (5)$$

by analogy with the corresponding oxygen complex of Cu(I)-haemocyanin.

A specific feature of this oxygen complex is the coordinated $O_2$ does not separate from the complex even when it is heated or deaerated under reduced pressure. Thus, if free oxygen in the solution is removed in advance, it is possible to avoid the danger of explosion due to direct mixing of organic substances with $O_2$ gas, since no free $O_2$ is contained in the catalyst solution. Further, the complex is stable in contrast to a complex of copper-protein, so that it requires boiling at 100°C to oxidise Cu(I) into Cu(II) with the combined oxygen in the complex. Further, it has been found that the present oxygen complex selectively oxidises organic substances by means of the combined oxygen under mild conditions to give desired oxygen-containing organic compounds in a high yield.

For example, when the present oxygen complex is applied to oxidation of acetaldehyde (CH$_3$CHO), acetic acid is formed as expressed by the following equation:

$$2CH_3CHO + L \cdot Cu(I)Cl - O_2 - Cu(I)Cl \cdot L$$
$$\rightarrow 2CH_3COOH + 2L \cdot Cu(I)Cl \quad (6)$$

wherein L represents hmpa as a ligand.

Since this reaction proceeds even at a low temperature in the vicinity of 40°C as described later in Examples, acetic acid is obtained with a high yield and a small amount of byproduct. Since the material functioning as an oxidising agent is the oxygen activated by coordination, the valence of the transition metal ion is unchanged, and the oxygen complex is returned to the original Cu(I)Cl · hmpa complex; when the latter complex has oxygen absorbed, it is able to reproduce the effective oxygen complex. Since the oxygen absorption of Cu(I)Cl · hmpa is selective, the complex exhibits the specific feature that when air is passed therethrough as an oxygen source, the oxygen complex can be easily formed. Namely Cu(I)Cl · hmpa functions as a catalyst for activating oxygen. In addition, since oxygen is selectively absorbed even when air is used as an oxygen source, the effectiveness is the same as when pure oxygen is used, which is advantageous in cost.

The present invention can be applied to various oxidation reactions by which organic compounds as substrate are oxidised into the corresponding oxygen-containing organic compounds. Typical oxidations in accordance with the present invention are the conversion of aldehydes into the corresponding organic acids such as acetaldehyde into acetic acid, propionaldehyde into propionic acid, acrolein into acrylic acid, benzaldehyde into benzoic acid; conversion of primary alcohols such as ethyl alcohol into aldehydes such as acetaldehyde; conversion of secondary alcohols such as isopropyl alcohol into ketones such as acetone; and conversion of cumene, into phenol and acetone. Further, the present invention can be also applied to various synthetic reactions, if necessary, in combination of the present complex catalyst with other complex catalysts. Examples of such reactions are those from LPG, butane, naphtha, into acetic acid; from benzene into maleic anhydride; from toluene into benzoic acid; from naphthalene into phthalic anhydride; from o-xylene into phthalic anhydride; from p-xylene into terephthalic acid; and from cyclohexane into cyclohexanol.

The metal M of the transition metal compounds ($M_mX_n$) from which the oxygen complex of the present invention is formed is selected from Cu and Ag of Group I of the Periodic Table, Ti and Zr of Group IV thereof, V and Nb of Group V thereof, Cr, Mo and W of Group VI thereof and Fe, Co and Ni of Group VIII thereof, and particularly preferred to be Cu(I), Ti(III) and V(III). Typical examples of the anion X are halogen ions or anions such as $BF_4^-$, $PF_6^-$, $SO_4^{2-}$, and $CH_3COO^-$; particularly preferred are halogen ions $Cl^-$, $BR^-$ and $I^-$.

The ligand L is preferred to be an organic phosphorus compound represented by phosphorus acid such as a mono-, di- or triester formed by reaction of phosphorus acid with methanol or ethanol, phenylphosphinic acid esters, dimethylphosphinous acid esters, triethylphosphine, triphenylphosphine, phosphoric acid derivatives such as triphenylphosphine oxide, hexamethylphosphoramide, hexaethylphosphoramide, and a mono-, di- or triester formed by reaction of phosphoric acid with methanol or ethanol, and further dimethyl methylphosphonate and methyl dimethylphosphinate. A particularly preferred ligand is hexamethylphosphoramide.

When the reaction is carried out in solution, the preferred solvents are those which dissolve the complex and at the same time are easily separated from the resulting oxygen-containing organic compounds. Preferred solvents are aliphatic, aromatic or alicyclic hydrocarbons, alcohols, ethers, ketones, glycols, carbonates, sulfones and nitriles, or if the ligand L is a liquid, it is also possible to use this ligand itself as the solvent.

Further, it is also possible to support the complex which oxygen complex is formed through oxygen absorption, on a porous carrier such as active carbon, a silicate, porous glass, or a polymer having a network (macroreticular) structure, and carry out the oxidation reaction.

The present invention will be illustrated further by the following Examples. The gas volumes quoted in the Examples are obtained under standard conditions.

Example 1

Into a 1 l capacity reaction tube were fed Cu(I)Cl (5 g, 50 mmols) and hmpa (515 g) to prepare a complex solution (50 ml) of Cu(I)Cl · hmpa (0.1 mol/l). When air (3.0 l) was passed through the solution, oxygen (0.55 l, 24.5 mmols) was absorbed therein. $N_2$ gas was then passed therethrough. As a result, only the oxygen physically dissolved in the liquid phase part of the reactor was removed, but separation of oxygen from the combined oxygen in the oxygen complex was not observed. Namely the oxygen absorption reaction is irreversible. This is a great specific feature with respect to safety in practical processes. Acetaldehyde (10 g, 227 mmols) was added to the above solution, and the mixture was warmed to 40°C under atmospheric pressure. After reaction for 2 hours, the reaction solution was analyzed by gas chromatography. As a result, acetic acid (2.8 g, 47 mmols) was produced. The reaction of acetaldehyde with the oxygen complex is carried out according to the above equation (6), and in this Example since acetaldehyde is present in excess, the amount of acetic acid formed is regulated by the concentration of the oxygen complex. Thus the conversion of acetaldehyde into acetic acid was 96% based on the concentration of the combined oxygen in the oxygen complex, and the oxidation reaction advanced nearly quantitatively.

Example 2

Example 1 was repeated except that the reaction was carried out at 60°C for one hour. The amount of acetic acid formed was 2.9 g (48 mmols). Thus it was found that when the reaction temperature was raised from 40°C to 60°C, the reaction rate increased and the yield amounted to 98% in a short time.

Example 3

Example 1 was repeated except that acetaldehyde (0.9 g, 20 mmols) was added and the reaction was carried out at 60°C for one hour. In this case, since the oxygen complex is present in excess, the yield of acetic acid is regulated by the acetaldehyde concentration. The yield of acetic acid based on acetaldehyde in this Example amounted to 98%. Namely it was observed that the reaction advanced nearly quantitatively, as in the previous Example.

Example 4

In Example 2, acetaldehyde was in advance added to the solution of Cu(I)Cl · hmpa, and air was then passed through the solution to carry out the oxidation experiment under the same conditions as in Example 2. Conversion was 96%. Further, when air and acetaldehyde in amounts within the explosion limit were at the same time passed through the solution in a ratio of (the amount of the reaction solution)/(the rate of gas passed)=60 h$^{-1}$, 86% of acetaldehyde was oxidised into acetic acid.

## Example 5

In Example 1, the amount of hmpa added was changed to 17.3 g to form Cu(I)Cl · hmpa complex, followed by adding toluene to prepare a toluene solution of Cu(I)Cl · hmpa complex. Reaction was then carried out under the same conditions as in Example 2 to obtain a yield of 97%. Thus even when the solvent was changed to toluene, the acetic acid yield was almost the same.

## Example 6

Reaction was carried out under the same conditions as in Example 2 except that propionaldehyde (10 g, 172 mmols) was added, to obtain propionic acid (3.4 g, 46 mmols). Its yield based on the oxygen complex was 94%, which result shows that propionaldehyde was oxidised at the same rate and selectivity as in the case of acetaldehyde.

## Example 7

Vanadium trichloride V(III)Cl$_3$ (7.9 g, 50 mmols) and hmpa (515 g) were fed into a reaction tube similar to that used in Example 1 to prepare a complex solution (500 ml) of V(III)Cl$_3$ · hmpa (0.1 mol/l). When air (1.5 l) was passed through the solution, oxygen (0.45 l, 20 mmols) was absorbed. The solution colour changed from the original red-violet colour to yellow-green colour. Since the solution colour of the complex of vanadyl chloride with hmpa, V(IV)O Cl$_3$ · hmpa which is a tetravalent vanadium complex is dark green, it is presumed in view of the difference in colour that it is the oxygen complex of V(III)Cl$_3$ · hmpa which has formed. Acetaldehyde (10 g, 227 mmols) was added to the complex solution after absorption of oxygen, and the mixture was heated to 60°C under atmospheric pressure. After reaction for 1.5 hour, the amount of acetic acid formed was 1.1 g (18 mmols). The yield based on the combined oxygen in the oxygen complex was 43%.

## Example 8

Titanium trichloride Ti(III)Cl$_3$ (7.7 g, 50 mmols), hmpa (270 g) and sulfolane (230 g) were fed into a reaction tube similar to that used in Example 1 to prepare a complex solution (500 ml) of Ti(III)Cl$_3$ hmpa (1 mol/l). When air was passed through the complex solution in the same manner as in Example 8, oxygen (0.28 l, 12.5 mmols) was absorbed. The colour of the solution changed from the original blue to orange-red. In addition, when titanium tetrachloride Ti(IV)Cl$_4$ as a higher tetravalent titanium compound was added to a solution similar to the above, a yellow precipitate was formed. From this it is considered that the oxygen complex which was formed was a complex of Ti(III)Cl$_3$ · hmpa. To this solution was added propionaldehyde (10 g, 172 mmols) and the mixture was warmed to 40°C under the atmospheric pressure. After one hour, the resulting complex solution was analyzed by gas chromatography. Propionic acid (1.0 g, 14 mmols) was formed. Its yield based on the oxygen complex was 56%.

## Example 9

Example 1 was repeated except that Cu(I)Cl was replaced by Cu(I)Br. The amount of oxygen absorbed was not significantly different. The acetic acid yield was 94%.

## Example 10

Beads of a styrene-divinylbenzene copolymer of macroreticular (network) from (Amberlite XA D-4 made by Organo Company; particle diameter 1 mmφ; specific surface area 700—800 m$^2$/g) (50 ml) was impregnated with a catalyst solution containing the oxygen complex having the composition shown in Example 1, followed by filtration by means of suction to prepare a granular catalyst, which was then filled in a hardglass reaction tube having an inner diameter of 20 mmφ. Acetaldehyde gas was passed through the tube at a rate of 1 l/min and heated up to 20°C. The product in the exit gas was analysed by gas chromatography. The product was acetic acid alone and its yield based on acetaldehyde was 5% until two hours after the start of the reaction. Thereafter the exit gas was recycled to obtain an acetaldehyde yield of 85% based on the oxygen complex. Thereafter, the feed of acetaldehyde was stopped and the solution was cooled down to 60°C, followed by passing air therethrough to regenerate the combined oxygen consumed by the reaction and then the oxidation process was repeated under the above conditions. The results were similar.

From the foregoing, it is evident that even when the complex of the present invention is supported on a porous carrier, the reaction by means of the combined oxygen in the oxygen complex advances.

In addition, it was possible to use other porous carriers such as silicates, active carbon and porous glass. Further, as for the treating process after the impregnation, it was possible to employ other various processes such as filtration by means of suction, passing of heated gas and low temperature calcination.

According to the present invention, when air is passed through a complex consisting of a salt of a specified transition metal and an organic phosphorus compound to form an oxygen complex and an organic compound is oxidised with the combined oxygen activated thereby, the oxygen-oxidation reaction of the organic compound is possible under normal pressures and at normal temperatures; hence it is possible to produce objective oxygen-containing organic compounds selectively and with a high yield. Further, since the amount of by-products contained in the product is small, the production steps including the subsequent purification is simplified, and since oxygen is selectively absorbed using air as an oxygen source, the same effectiveness as in the case of use of pure oxygen is obtained. Furthermore, since the oxygen absorption is irreversible, it is possible to easily remove excess free oxygen after the oxygen complex has been formed; hence the present invention is very advantageous with respect to safety.

## Claims

1. A process for producing oxygen-containing organic compounds by oxidising organic compounds in the presence of a catalyst, which catalyst is a complex ($M_mX_n \cdot Ll$) consisting of a transition metal compound ($M_mX_n$) wherein M represents at least one transition metal and X represents an anion and an organic phosphorus compound (L) as a ligand, and m, n and l are positive integers characterised in that the organic compounds which are oxidised exclude olefins, in that the catalyst activates oxygen through formation of a complex of the catalyst and molecular oxygen, and in that M represents at least one transition metal chosen from Cu and Ag of Group I; Ti and Zr of Group IV; V and Nb of Group V; Cr, Mo and W of Group VI and Fe, Co and Ni of Group VIII of the Periodic Table.

2. A process according to Claim 1, wherein the anion X is at least one of $Cl^-$, $Br^-$, $I^-$, $BF_4^-$, $PF_6^-$, $SO_4^{2-}$ and $CH_3COO^-$.

3. A process according to Claim 1 or 2, wherein the ligand L is at least one compound selected from alkoxy, alkyl and amide derivatives of phosphorus acid and phosphoric acid.

4. A process according to Claim 1, 2 or 3, wherein each of m, n and l independently represent an integer of 1 to 4.

5. A process according to any one of the preceding claims, wherein as a solvent for said complex, there is used at least one compound selected from aliphatic, aromatic and alicyclic hydrocarbons, oxygen-containing organic compounds, organic halide compounds, nitrogen-containing organic compounds, organic sulfur compounds, organic fluorine compounds and heterocyclic compounds.

6. A process according to any one of Claims 1 to 4, wherein the ligand L is liquid and is used as a solvent for the complex.

7. A process according to any one of the preceding claims, which process comprises passing air or oxygen through a solution of said complex to form an oxygen complex, into which solution an organic compound as a substrate is introduced, followed by oxidising the mixture by means of the combined oxygen in said oxygen complex to produce an oxygen-containing organic compound.

8. A process according to any one of the preceding claims, wherein the organic compound to be oxidised is an aldehyde and the oxygen-containing compound is an organic acid.

## Patentansprüche

1. Verfahren zur Herstellung sauerstoffhaltiger organischer Verbindungen durch Oxidation organischer Verbindungen in Gegenwart eines Katalysators, wobei der Katalysator ein Komplex ($M_mX_n \cdot Ll$) ist, der aus einer Übergangsmetallverbindung ($M_mX_n$), worin M für mindestens ein Übergangsmetall und X für ein Anion steht, und einer Organophosphor-Verbindung als Ligand (L) besteht, wobei m, n und l positive ganze Zahlen sind, dadurch gekennzeichnet, daß die zu oxidierenden organischen Verbindungen nicht zu den Olefinen zählen; daß der Katalysator Sauerstoff durch Komplexbildung zwischen Katalysator und Sauerstoff aktiviert; und daß M für mindestens ein Übergangsmetall steht, das aus folgenden Gruppen des Periodensystems ausgewählt ist: Cu und Ag von Gruppe I; Ti und Zr von Gruppe IV; V und Nb von Gruppe V; Cr, Mo und W von Gruppe VI sowie Fe, Co und Ni von Gruppe VIII.

2. Verfahren nach Anspruch 1, dadurch gekennzeichnet, daß das Anion X mindestens eines der folgenden ist: $Cl^-$, $Br^-$, $I^-$, $BF_4^-$, $PF_6^-$, $SO_4^{2-}$ und $CH_3COO^-$.

3. Verfahren nach Anspruch 1 oder 2, dadurch gekennzeichnet, daß der Ligand L mindestens einer unter den folgenden Verbindungen ausgewählter ist: Alkoxy-, Alkyl- und Amid-Derivate der phosphorigen Säure bzw. der Phosphorsäure.

4. Verfahren nach Anspruch 1, 2 oder 3, dadurch gekennzeichnet, daß m, n und l unabhängig voneinander für eine ganze Zahl zwischen 1 und 4 stehen.

5. Verfahren nach mindestens einem der Ansprüche 1—4, dadurch gekennzeichnet, daß als Lösungsmittel für den Komplex wenigstens eine unter den folgenden Solventien ausgewählte Verbindung eingesetzt wird: aliphatische, aromatische und alicyclische Kohlenwasserstoffe, sauerstoffhaltige organische Verbindungen, organische Halogenverbindung, stickstoffhaltige organische Verbindungen, organische Schwefelverbindungen, organische Fluorverbindungen und heterocyclische Verbindungen.

6. Verfahren nach mindestens einem der Ansprüche 1—4, dadurch gekennzeichnet, daß der Ligand L flüssig ist und als Lösungsmittel für den Komplex eingesetzt wird.

7. Verfahren nach mindestens einem der Ansprüche 1—6, dadurch gekennzeichnet, daß Luft oder Sauerstoff durch eine Lösung des Komplexes unter Bildung eines Sauerstoff-Komplexes geleitet wird, wonach in diese Lösung eine organische Verbindung als Substrat eingebracht wird, welches mittels des im Sauerstoff-Komplex gebundenen Sauerstoffs zu einer sauerstoffhaltigen organischen Verbindung oxidiert wird.

8. Verfahren nach mindestens einem der Ansprüche 1—7, dadurch gekennzeichnet, daß die zu oxidierende Verbindung ein Aldehyd und die sauerstoffhaltige Verbindung eine organische Säure ist.

## Revendications

1. Procédé pour la production de composés organiques oxygénés, par oxydation de composés organiques en présence d'un catalyseur, lequel catalyseur est un complexe ($M_mX_n \cdot Ll$)

constitué d'un composé d'un métal de transition ($M_m X_n$) où M représente au moins un métal de transition, et X représente un anion, et d'un composé organique du phosphore (L) en tant que ligand, et m, n et I sont des entiers positifs, caractérisé en ce que les composés organiques qui sont oxydés excluent les oléfines, que le catalyseur active l'oxygène par la formation d'un complexe du catalyseur et d'oxygène moléculaire, et que M représente au moins un métal de transition choisi parmi Cu et Ag du Groupe I; Ti et Zr du Groupe IV; V et Nb du Groupe V; Cr, Mo et W du Groupe VI, et Fe, Co et Ni du Groupe VIII du Tableau Périodique.

2. Procédé selon la revendication 1, dans lequel l'anion X est au moins l'un des anions $Cl^-$, $Br^-$, $I^-$, $BF_4^-$, $PF_6^-$, $SO_4^{2-}$ et $CH_3 COO^-$.

3. Procédé selon la revendication 1 ou 2, dans lequel le ligand L est au moins un composé choisi parmi les dérivés alcoxy, alkyle et amide de l'acide phosphoreux et de l'acide phosphorique.

4. Procédé selon la revendication 1, 2 ou 3, dans lequel les indices m, n et I, chacun indépendamment des autres, représentent des entiers de 1 à 4.

5. Procédé selon l'une quelconque des revendications précédentes, dans lequel on utilise en tant que solvant dudit complexe au moins un composé choisi parmi les hydrocarbures aliphatiques, aromatiques et alicycliques, les composés organiques oxygénés, les composés halogénures organiques, les composés organiques azotés, les composés organiques du soufre, les composés organiques du fluor et les composés hétérocycliques.

6. Procédé selon l'une quelconque des revendications 1 à 4, dans lequel le ligand L est liquide et est utilisé comme solvant du complexe.

7. Procédé selon l'une quelconque des revendications précédentes, lequel procédé consiste à envoyer de l'air ou de l'oxygène à travers une solution dudit complexe pour former un complexe de l'oxygène, solution dans laquelle on introduit un composé organique, opération suivie de l'oxydation du mélange au moyen de l'oxygène combiné dans ledit complexe de l'oxygène, pour produire un composé organique oxygéné.

8. Procédé selon l'une quelconque des revendications précédentes, dans lequel le composé organique à oxyder est un aldéhyde, et le composé oxygéné est un acide organique.

# FIG.1

λ max

265nm

290nm

260nm

Absorbance

0.6
0.4
0.5
0

230 250 270 290 310

Wave Length λ(nm)